# EUROPÄISCHE PATENTSCHRIFT

(11) **EP 1 805 530 B1**
(45) Veröffentlichungstag und Bekanntmachung des Hinweises auf die Patenterteilung: **29.12.2010**
(21) Anmeldenummer: 05811032.1
(22) Anmeldetag: 26.10.2005
(51) Int. Cl.: G01S 13/93, G08G 1/16

(54) **VERFAHREN ZUR ERHÖHUNG DER FAHRSICHERHEIT UND/ODER DES KOMFORTS EINES KRAFTFAHRZEUGS**
PROCESS FOR ENHANCING THE SAFETY AND/OR COMFORT OF A MOTOR VEHICLE
PROCEDE POUR AUGMENTER LA SECURITE ET/OU LE COMFORT D'UN VEHICULE

(30) Priorität: 29.10.2004 DE 102004052961; 26.10.2005 DE 102005051539
(43) Veröffentlichungstag der Anmeldung: 11.07.2007
(73) Patentinhaber: Continental Teves AG & Co. oHG, 60488 Frankfurt am Main (DE)
(72) Erfinder: FENNEL, Helmut, 65812 Bad Soden (DE); STÖLZL, Stephan, 69469 Weinheim (DE)
(86) Internationale Anmeldenummer: PCT/EP2005/055585
(87) Internationale Veröffentlichungsnummer: WO 2006/045826

(56) Entgegenhaltungen:
- EP-A- 0 910 057
- WO-A-02/14130
- WO-A-03/021190
- DE-A1- 4 411 125
- DE-A1- 10 248 968
- DE-A1- 19 931 161
- DE-A1- 19 952 392
- US-A- 4 964 679
- US-A- 5 748 476
- US-A1- 2004 078 133
- US-A1- 2004 142 678
- PATENT ABSTRACTS OF JAPAN Bd. 2003, Nr. 04, 2. April 2003 (2003-04-02) -& JP 2002 350169 A (ALPINE ELECTRONICS INC), 4. Dezember 2002 (2002-12-04)

## Beschreibung

Die Erfindung betrifft ein Verfahren gemäß Oberbegriff von Anspruch 1, ein Verfahren gemäß Oberbegriff von Anspruch 12 sowie ein elektronisches Bremsensteuergerät und/oder Fahrdynamiksteuergerät.

Es sind bereits Navigationssysteme für Kraftfahrzeuge bekannt, welche nicht nur zum Zwecke der Navigation eingesetzt werden, sondern darüber hinaus Verkehrsinformationen zur Verfügung stellen. Eine Verkehrsinformation kann zum Beispiel darin bestehen, dass in den kartographischen Daten des Navigationssystems ein Verkehrsschild oder eine etwaige Besonderheiten der Fahrstrecke, wie etwa eine Geschwindigkeitsbegrenzung, abgelegt sind. Diese kann sich außerdem ggf. saisonal ändern (z.B. Wintersperren) oder durch aktuelle Wetterdaten (Eis, Schnee etc.) beeinflusst bzw. vorgegeben sein.

Aus der DE 197 41 033 A1 bekannt, in einem Kraftfahrzeug eine Verkehrsinformation zur Warnung eines Fahrzeugführers bei Überschreitung einer vorgegebenen Geschwindigkeit zu nutzen. Dabei wird eine akustische oder optische Meldung für den Fahrer erzeugt.

Aus der DE 44 11 125 C2 ist die Nutzung von drahtlosen Verkehrsschildinformationen mittels in Verkehrsschildern integrierten Transpondern bekannt, welche zur Beeinflussung der Fahrgeschwindigkeit von Kraftfahrzeugen, insbesondere Lastkraftwagen genutzt werden können. Ein ganz ähnliches System wird in der DE 102 48 968 A1 beschrieben. Auch hier werden mit Transpondern ausgestattete Verkehrschilder zur Übertragung von Verkehrsinformationen an Kraftfahrzeuge genutzt und in Abhängigkeit davon entweder eine Anzeige der Verkehrsinformation oder nur eine Begrenzung oder Beeinflussung der Fahrgeschwindigkeit (z.B. über Tempomat) vorgenommen.

Die Erfindung setzt sich zum Ziel, unter Nutzung der Technik von aktuellen Navigationssystemen die Fahrsicherheit und/oder den Komfort zu erhöhen.

Diese Aufgabe wird erfindungsgemäß gelöst durch das Verfahren gemäß Anspruch 1.

Die Erfindung beschäftigt sich mit dem Gedanken, in Fahrzeugsteuergeräten mit einer sicherheitserhöhenden Aufgabe, insbesondere in einem Steuergerät eines elektronischen Kraftfahrzeugbremssystems, zusätzlich neben den vorhandenen Informationen die Informationen eines Navigationssystems bzw. entsprechende fest gespeicherte bzw. dynamisch veränderte kartographische Daten zur Beurteilung der aktuellen Gefahrensituation zu nutzen. Mit Hilfe dieser und ggf. weiterer vorhandener Fahrzeugdaten wird dann ein aktueller Gefahrenwert ermittelt, welcher den Grad der aktuellen und örtlichen Gefahr angibt, der der Fahrer bzw. die Insassen momentan ausgesetzt ist/sind. Der Gefahrenwert hängt beispielsweise von den Faktoren Fahrzeuggeschwindigkeit, Reibwert der Strasse, Außentemperatur, Fahrt über Brücken oder durch Tunnels, Kurvenfahrt, Bergfahrt oder Talfahrt, Vorliegen einer geregelten Bremsung und dergleichen ab.

Bevorzugt werden in Abhängigkeit von dem ermittelten Gefahrenwert Eingriffe in ein Bremsensteuergerät (z.B. ABS-Steuergerät) und/oder Fahrdynamiksteuergerät (z.B. ESP-Steuergerät) vorgenommen.

Die Eingriffe können bevorzugt erfolgen, in dem eine oder mehrere der Maßnahmen aus der Gruppe
- Vorbereiten des Bremssystems oder der Fahrdynamikregelung für ein schnelleres Ansprechen der Bremsvorrichtung (zum Beispiel durch Vorbefüllen der Radbremszylinder),
- selbstständiger Bremseneingriff zum Verzögern des Fahrzeugs ohne Fahrererbremsung (z.B. ACC-Eingriff) oder
- Vorbereiten des Fahrwerks oder sonstiger Fahrzeugkomponenten auf eine bevorstehende Bremsung (z.B. durch Eingriff in ein aktives Fahrwerk)
durchgeführt wird. Die beiden erstgenannten Maßnahmen können besonders einfach in einem Bremsensteuergerät mit ESP-Funktionalität durchgeführt werden, da dort in der Regel eine Hydraulikpumpe für einen Druckaufbau ohne Bremseneingriff vorgesehen ist.

Vorzugsweise wird weiterhin zusätzlich oder alternativ zu dem besagten Eingriff oder der vorbereitenden Maßnahmen eine Warnung des Fahrzeugführers insbesondere durch Anzeigeelemente im Bereich des Fahrzeugführers oder durch Änderung der Ansprechcharakteristik eines Fahrpedals (Pedalgefühl) herbeigeführt.

Weiterhin bevorzugt ist es, dass die vorstehend beschriebene(n) Maßnahme(n) bei Erkennung eines Verstoßes einer Verkehrsregel oder bei Gefahr eingeleitet wird/werden.

Es ist außerdem bevorzugt, dass die Vorbereitungsmaßnahme darin besteht, dass ein Vorbefüllen in mindestens einem der vorhandenen Radbremszylinder durchgeführt wird.

Zusätzlich ist außerdem bevorzugt, dass die Vorbereitungsmaßnahmen in einem Blockierverhinderungssystem (ABS) und/oder einer Einrichtung zur Fahrdynamikregelung (ESP) und/oder in einer Abstandsregelung (ACC) vorgenommen wird/werden.

Das Navigationssystem ist bevorzugt solcher Art, dass dieses laufend aktualisierbar ist. In diesem sind insbesondere die Koordinaten von Verkehrshinweisgebern (Schilder, Brücken, Kurven etc.) in Form von Daten abgelegt oder diese Art von Daten ist aus den Gefahrenstellen selbst, wie zum Beispiel enge Kurven, Brücken etc., also aus dem kartographischen Datenmaterial ableitbar.

Schließlich ist bevorzugt, dass die in Form von Daten abgelegten Verkehrshinweisgeber gemeinsam mit sendenden Verkehrhinweisgebern in an sich bekannter Transpondertechnik genutzt werden.

Die Fahrerwarnung kann bevorzugt durch optische, akustische oder haptische Signale erfolgen, im Falle einer optischen Warnung bietet sich beispielsweise die Anzeige mittels einer Lampe oder einem Display an.

Nach der Erfindung ist das Navigationssystem im Gehäuse des Kraftfahrzeugbremssystems integriert .

Die Verkehrsinformation wird mit kartographischen Daten eines Navigationssystem in sinnvoller Weise verknüpft. Im Falle der Nutzung eines Navigationssystems, d.h. es besteht eine Datenverbindung zwischen Steuergerät und Navigationssystem, ist es besonders zweckmäβig, dass dieses regelmäßig mit aktuellen Daten versorgt werden kann, zum Beispiel durch manuellen oder automatischen Update.

Ein Eingriff in die Funktionsgruppen mit sicherheitserhöhenden Aufgaben kann bevorzugt darin bestehen, dass die vorhandene elektronische Bremsanlage auf eine bevorstehende Bremsung vorbereitet wird, zum Beispiel in dem eine Hydraulikpumpe aktiviert wird, welche eine Vorbefüllung der zu den Radbremszylindern führenden Bremsleitungen oder der Radbremszylinder vornimmt. In diesem Fall wird in der Regel der Bremsweg auf Grund einer verringerten Reaktionszeit des Bremssystems verkürzt.

Außerdem bevorzugt ist es, dass als Eingriff ein aktiver Bremseneingriff, insbesondere mit einer vorgegebenen Verzögerung, vorgenommen wird und/oder die Ansprechschwellen eines Bremsassistenten an eine erhöhte Bremsbereitschaft angepasst werden.

Eine weitere bevorzugte Möglichkeit des Eingriffs besteht darin, dass bei Gefahr die Ansprechschwellen eines Bremsassistenten so einzustellen, dass sich ein stärkeres Ansprechverhalten des Bremssystems ergibt.

Eine weitere bevorzugte Möglichkeit des Eingriffs besteht darin, dass bei Gefahr durch das Bremssystem eine vom Fahrer unabhängige aktive Bremsung des Fahrzeugs hervorgerufen wird; z.B. ein ACC-Bremsvorgang, welcher insbesondere mit einer Fahrzeug-Verzögerung von etwa 0,3 g durchgeführt wird.

Eine weitere bevorzugte Möglichkeit des Eingriffs besteht darin, dass die Parameter eines elektronisch verstellbaren Fahrwerks oder die Regelparameter eines aktiv geregelten Fahrwerks an die auf vorstehend beschriebene Weise erkannte Gefahrensituation angepasst werden.

Eine weitere bevorzugte Möglichkeit des Eingriffs besteht darin, bei einem Force-Feedback-Pedal, insbesondere in Zusammenhang mit einem Fahrpedal, das Pedal bei Gefahr härter einzustellen, so dass der Fahrer gewarnt ist. Ein besonders zweckmäßig zu beeinflussendes Fahrpedal stellt das Gaspedal dar, da ein Fahrer in der Regel den Fuß auf diesem Pedal hat und bei Beeinflussung der Gaspedalcharakteristik dementsprechend früh gewarnt wird.

Situationen, bei denen ein Eingriff oder eine Warnung erfolgt, sind beispielsweise erhöhte Geschwindigkeit gegenüber der gerade am Ort des Fahrzeugs und zu dem aktuellen Zeitpunkt zulässigen Geschwindigkeit, Annähern an eine Kreuzung, bei der die aktuelle Fahrtrichtung keinen Vorrang hat, sonstige verkehrswidrige Fahrmanöver (Fahren in Einbahnstrasse oder Strassen, in die eine Einfahrt verboten ist), auf Grund von Wettereinflüssen gefährdete Streckenabschnitte (vereiste Brücken, Sturmwarnung etc.) oder das schnelle Zufahren auf enge Kurven.

Dabei ist es bevorzugt, dass das Steuergerät, in dem das zuvor beschriebene Verfahren durchgeführt wird, die Verkehrsinformation mit sensorisch durch das Fahrzeug gewonnenen Informationen über den aktuellen Fahrzustand vergleicht und daraus weitere Informationen über die Notwendigkeit eines Eingriffs oder einer Warnung gewinnt. Geeignete sensorisch gewonnene Informationen sind zum Beispiel Fahrgeschwindigkeit, Gierrate, Außentemperatur sowie Abstandsignale hinsichtlich anderer Fahrzeuge oder Hindernisse.

Die Erfindung bezieht sich außerdem auf ein Verfahren zum Ermitteln eines Kennwertes für eine Fahrbahnsteigung und/oder eines Fahrbahngefälles aus in einem Kraftfahrzeug vorliegenden sensorisch ermittelten Daten, insbesondere verknüpft mit dem Verfahren, wie es vorstehend beschrieben wurde, bei dem kartographische Informationen eines Navigationssystems zur verbesserten Bestimmung der Fahrbahnsteigung und/oder des Fahrbahngefälles mitgenutzt werden.

Die Erfindung betrifft schließlich auch ein elektronisches Bremsensteuergerät und/oder Fahrdynamiksteuergerät, welches dadurch gekennzeichnet ist, dass in diesem ein Verfahren, wie weiter oben beschrieben, ausgeführt wird.

Weitere bevorzugte Ausführungsformen ergeben sich aus den Unteransprüchen und der nachfolgenden Beschreibung eines Ausführungsbeispiels an Hand von Figuren.

Nachfolgend wird die Erfindung an Hand eines Beispiels näher erläutert.

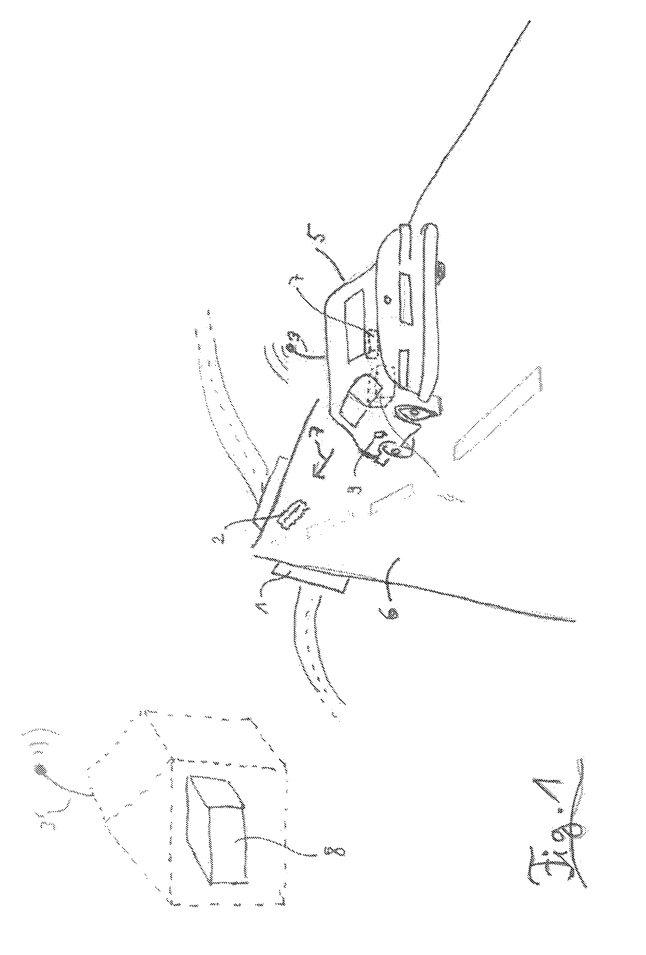

Es zeigt
- Fig. 1: eine schematische Darstellung eines Personenkraft- fahrzeugs im Straßenverkehr.

Fahrzeug 5 bewegt sich auf Strasse 6 in Richtung des Pfeils 7 auf eine Brücke 1 zu. Die Brücke repräsentiert im Winter ein Gefahrenpotential, da sich bei entsprechender Witterung mit einer gewissen Wahrscheinlichkeit Eis 2 auf der Fahrbahnoberfläche befinden kann. Navigationssystem 7 stellt über eine Schnittstelle Bremssystem 4 eine Information über eine sich in unmittelbarer Entfernung befindenden Brücke 1 bereit. Alternativ kann eine entsprechende kartographische Information auch über die durch Antennen 3 und 3' gebildete Funkstrecke von einem Karten-Server 8 drahtlos angefordert werden. Innerhalb von Bremssystem 4 werden zudem weitere sensorische Information, wie die Daten von Raddrehzahlsensoren 9 ausgewertet. Aus den Raddrehzahlsensordaten können unter anderem Aussagen über die momentane Fahrzeuggeschwindigkeit oder eine eventuelle Kurvenfahrt abgeleitet werden. Zusätzlich ist es zweckmäßig zu überprüfen, ob eine Regelungsfunktion, wie ABS oder ESP aktiv ist. Diese fahrdynamischen Informationen werden dann mit den kartographischen Informationen über den Standort der Brücke verknüpft und im Hinblick auf ein bevorstehendes erhöhtes Gefahrenpotential bewertet.

In Abhängigkeit des Ergebnisses der Gefahrenpotentialermittlung kann Bremsensteuergerät 4 das Fahrzeug und den Fahrer auf die bevorstehende Gefahrensituation vorbereiten, in dem eine Anzeige im Armaturenbrett erscheint, gleichzeitig die Bremsanlage vorbefüllt und zusätzlich ein passives Sicherheitssystem aktiviert wird, welches u.a. dafür sorgt, dass der Sicherheitsgurt gestrafft wird.

## Patentansprüche

1. Verfahren zur Erhöhung der Fahrsicherheit und/oder des Komforts eines Kraftfahrzeugs, wobei
a) Daten eines Fahrzeugsteuergerätes oder einer Gruppe von entsprechenden Steuergeräten, welches/welche zur Steuerung einer sicherheitserhöhenden Aufgabe, vorgesehen ist, mit Daten eines Navigationssystems oder kartographischen Daten logisch verknüpft werden, wobei das Navigationssystem kartographische Daten umfasst,
b) kartographischen Daten gemeinsam mit sensorisch direkt oder indirekt im Fahrzeug erfassten Informationen über den aktuellen Fahrzustand zur Ermittlung eines aktuellen Gefahrenwertes herangezogen werden und
c) in Abhängigkeit des Gefahrenwerts Eingriffe in die Funktionsgruppen mit sicherheitserhöhenden Aufgaben erfolgen, wobei insbesondere zusätzlich oder an Stelle des Eingriffs eine optische, akustische oder haptische Warnung an den Fahrzeugführer erzeugt wird
**dadurch gekennzeichnet,**
**dass** die kartographischen Daten mittels eines Navigationssystems bereitgestellt werden
und das Navigationssystem in dem Gehäuse eines Fahrzeugbremssystems integriert ist.

2. Verfahren nach Anspruch 1, **dadurch gekennzeichnet, dass** Eingriffe in die Funktionsgruppen mit sicherheitserhöhenden Aufgaben darin bestehen, dass eine oder mehrere der Maßnahmen aus der Gruppe
- Vorbereiten des Bremssystems oder der Fahrdynamikregelung für ein schnelleres Ansprechen der Bremsvorrichtung,
- selbstständiger Bremseneingriff zum Verzögern des Fahrzeugs ohne Fahrererbremsung oder
- Vorbereiten des Fahrwerks oder sonstiger Fahrzeugkomponenten auf eine bevorstehende Bremsung durchgeführt wird.

3. Verfahren nach mindestens einem der vorhergehenden Ansprüche, **dadurch gekennzeichnet, dass** die Art der sensorischen Informationsermittlung von den kartographischen Daten abhängig gemacht wird.

4. Verfahren nach mindestens einem der vorhergehenden Ansprüche, **dadurch gekennzeichnet, dass** die Vorgabe der sensorischen Vorzugsrichtung von Abstandssensoren von den kartographischen Daten abhängig gemacht wird.

5. Verfahren nach mindestens einem der vorhergehenden Ansprüche, **dadurch gekennzeichnet, dass** Parameter für ein elektronisches Bremssystem oder Fahrdynamikregelungssystem von den kartographischen Daten abhängig gemacht wird.

6. Verfahren nach mindestens einem der vorhergehenden Ansprüche, **dadurch gekennzeichnet, dass** das Navigationssystem oder ein anderes mit den kartographischen Daten in Bezug stehendes Rechensystem regelmäßig drahtlos oder manuell mit aktuellen Informationen über die Gefahrenstufe der gespeicherten Routen aktualisiert wird und/oder aktualisiert werden kann.

7. Verfahren nach mindestens einem der vorhergehenden Ansprüche, **dadurch gekennzeichnet, dass** zum Ermitteln des aktuellen Gefahrenwerts drahtlos übermittelte Verkehrsinformationen von Verkehrshinweisgebern auf Basis der Transpondertechnik herangezogen werden.

8. Verfahren nach mindestens einem der vorhergehenden Ansprüche, **dadurch gekennzeichnet, dass** eine Warnung des Fahrzeugführers durch Anzeigeelemente im Bereich des Fahrzeugführers oder durch Änderung der Ansprechcharakteristik eines Fahrpedals (Pedalgefühl) herbeigeführt wird.

9. Verfahren nach mindestens einem der vorhergehenden Ansprüche, **dadurch gekennzeichnet, dass** der Eingriff darin besteht, dass Leerwege der Bremsanlage verringert werden, was im Falle von hydraulischen Bremsanlagen insbesonder durch ein Vorbefüllen eines oder mehrerer Bremszylinder erreicht wird.

10. Verfahren nach mindestens einem der vorhergehenden Ansprüche, **dadurch gekennzeichnet, dass** der/die Eingriff(e) in einem Blockierverhinderungssystem (ABS) und/oder einer Einrichtung zur Fahrdynamikregelung (ESP) und/oder in einer Abstandsregelung (ACC) vorgenommen wird/werden.

11. Verfahren nach mindestens einem der vorhergehenden Ansprüche, **dadurch gekennzeichnet, dass** ab einem bestimmten Gefahrenwert eine drahtlose Benachrichtigung vom Fahrzeug ausgesendet wird, wie zum Beispiel ein Notruf.

12. Verfahren zum Ermitteln eines Kennwertes für eine Fahrbahnsteigung und/oder eines Fahrbahngefälles aus in einem Kraftfahrzeug vorliegenden sensorisch ermittelten Daten, verknüpft mit dem Verfahren gemäß mindestens einem der vorstehenden Ansprüche, **dadurch gekennzeichnet, dass** kartographische Informationen eines Navigationssystems zur Vorbereitung des Fahrzeugs auf topologische Besonderheiten der Fahrstrecke, wie beispielsweise Kurve, Steigungen und Gefälle, genutzt werden.

13. Elektronisches Bremsensteuergerät und/oder Fahrdynamiksteuergerät, **dadurch gekennzeichnet, dass** darin ein Verfahren nach mindestens einem der vorstehenden Ansprüche ausführt wird.

## Claims

1. Method for enhancing the safety and/or comfort of a motor vehicle, wherein
a) data from a vehicle control device or a group of corresponding control devices which is/are provided for controlling a safety-enhancing function are logically combined with the data from a navigation system or cartographic data, wherein the navigation system comprises cartographic data,
b) cartographic data are used together with information which is acquired in a sensory manner directly or indirectly in the vehicle and relates to the current driving state to determine a current hazard value, and
c) interventions into the function groups with safety-enhancing functions are carried out as a function of the hazard value, wherein in particular a visual, acoustic or haptic warning to the vehicle driver is generated additionally or instead of the intervention,
**characterized**
**in that** the cartographic data are made available by means of a navigation system, and the navigation system is integrated into the housing of a vehicle brake system.

2. Method according to Claim 1, **characterized in that** interventions into function groups with safety-enhancing functions consist in the fact that one or more of the measures from the group
- preparation of the brake system or of the vehicle movement dynamics control system for more rapid response of the brake device,
- independent braking intervention for decelerating the vehicle without braking by the driver or
- preparation of the chassis or other vehicle components for imminent braking,
is/are carried out.

3. Method according to at least one of the preceding claims, **characterized in that** the method of determination of sensory information is made dependent on the cartographic data.

4. Method according to at least one of the preceding claims, **characterized in that** the predefinition of the preferred sensory direction of distance sensors is made dependent on the cartographic data.

5. Method according to at least one of the preceding claims, **characterized in that** parameters for an electronic brake system or vehicle movement dynamics control system are made dependent on the cartographic data.

6. Method according to at least one of the preceding claims, **characterized in that** the navigation system or some other computing system which is related to the cartographic data is updated and/or can be updated regularly in a wireless fashion or manually with current information relating to the hazard stage of the stored routes.

7. Method according to at least one of the preceding claims, **characterized in that** traffic information which is conveyed in a wireless fashion from traffic information transmitters based on transponder technology is used to determine the current hazard value.

8. Method according to at least one of the preceding claims, **characterized in that** a warning of the vehicle driver is brought about by means of display elements in the region of the vehicle driver or by changing the response characteristic of an accelerator pedal (pedal sensation).

9. Method according to at least one of the preceding claims, **characterized in that** the intervention consists in reducing idle travel of the brake system, which, in the case of hydraulic brake systems, is achieved in particular by pre-charging one or more brake cylinders.

10. Method according to at least one of the preceding claims, **characterized in that** the intervention or interventions is/are made in a locking-prevention system (ABS) and/or in a device for vehicle movement dynamics control (ESP) and/or in an adaptive cruise controller (ACC).

11. Method according to at least one of the preceding claims, **characterized in that** starting from a certain hazard value wireless information is output by the vehicle, such as for example an emergency call.

12. Method for determining a characteristic value for a positive gradient and/or negative gradient of a carriageway from data which are determined by sensor means and are present in a motor vehicle, combined with the method according to at least one of the preceding claims, **characterized in that** cartographic information for a navigation system is used to prepare the vehicle for topological peculiarities of the section of route, such as for example bends, positive gradients and negative gradients.

13. Electronic brake control device and/or vehicle movement dynamics control device, **characterized in that** a method according to at least one of the preceding claims is carried out therein.

## Revendications

1. Procédé pour accroître la sécurité de déplacement et/ou le confort d'un véhicule automobile, selon lequel
a) les données d'un contrôleur de véhicule ou d'un groupe de contrôleurs correspondants qui est prévu pour commander un rôle d'augmentation de la sécurité sont combinées logiquement avec les données d'un système de navigation ou des données cartographiques, le système de navigation comprenant des données cartographiques,
b) les données cartographiques sont utilisées conjointement avec des informations acquises directement ou indirectement par détection dans le véhicule sur l'état de conduite actuel en vue de déterminer un indice de danger actuel et
c) des interventions dans les groupes fonctionnels ayant des rôles d'augmentation de la sécurité ont lieu en fonction de l'indice de danger, un avertissement visuel, sonore ou tactile étant notamment généré à l'attention du conducteur du véhicule en plus ou à la place de l'intervention,
**caractérisé en ce que**
les données cartographiques sont mises à disposition au moyen d'un système de navigation et le système de navigation est intégré dans le boîtier d'un système de freinage du véhicule.

2. Procédé selon la revendication 1, **caractérisé en ce que** les interventions dans les groupes fonctionnels ayant des rôles d'augmentation de la sécurité consistent en la réalisation d'une ou de plusieurs des mesures du groupe suivant :
- Préparation du système de freinage ou de la régulation de la dynamique de conduite pour une réaction plus rapide du dispositif de freinage,
- Intervention de freinage autonome pour ralentir le véhicule sans freinage du conducteur ou
- Préparation du mécanisme de roulement ou d'autres composants du véhicule à un freinage à venir.

3. Procédé selon au moins l'une des revendications précédentes, **caractérisé en ce que** la nature de la détermination des informations de détection est rendue dépendante des données cartographiques.

4. Procédé selon au moins l'une des revendications précédentes, **caractérisé en ce que** l'indication du sens de détection préférentiel des détecteurs de distance est rendue dépendante des données cartographiques.

5. Procédé selon au moins l'une des revendications précédentes, **caractérisé en ce que** les paramètres d'un système de freinage électronique ou d'un système de régulation de la dynamique de conduite sont rendus dépendants des données cartographiques.

6. Procédé selon au moins l'une des revendications précédentes, **caractérisé en ce que** le système de navigation ou un autre système de calcul en relation avec les données cartographiques est régulièrement actualisé et/ou peut être actualisé sans fil ou manuellement avec des informations actuelles sur le degré de danger des itinéraires mémorisés.

7. Procédé selon au moins l'une des revendications précédentes, **caractérisé en ce que** des informations de trafic communiquées sans fil par des générateurs d'indications de trafic sur la base de la technique des transpondeurs sont utilisées pour déterminer l'indice de danger actuel.

8. Procédé selon au moins l'une des revendications précédentes, **caractérisé en ce qu'**un avertissement du conducteur du véhicule est mis en oeuvre par des éléments indicateurs dans la zone du conducteur du véhicule ou par une modification de la caractéristique de réaction d'une pédale d'accélération (sensation de la pédale).

9. Procédé selon au moins l'une des revendications précédentes, **caractérisé en ce que** l'intervention consiste **en ce que** les courses à vide de l'équipement de freinage sont réduites, ce qui, dans le cas d'équipements de freinage hydrauliques, est notamment obtenu par un remplissage anticipé d'un ou plusieurs cylindres de freinage.

10. Procédé selon au moins l'une des revendications précédentes, **caractérisé en ce que** la/les intervention(s) a/ont lieu dans un système antiblocage (ABS) et/ou dans un dispositif de régulation de la dynamique de conduite (ESP) et/ou dans un régulateur de distance (ACC).

11. Procédé selon au moins l'une des revendications précédentes, **caractérisé en ce qu'**à partir d'un certain indice de danger, une notification sans fil est émise par le véhicule, par exemple un appel d'urgence.

12. Procédé de détermination d'une valeur caractéristique pour une pente montante de voie de circulation et/ou une pente descendante de voie de circulation à partir des données présentes dans un véhicule automobile et déterminées par détection, combiné avec le procédé selon au moins l'une des revendications précédentes, **caractérisé en ce que** les informations cartographiques d'un système de navigation sont utilisées pour préparer le véhicule aux particularités topologiques du trajet, par exemple les virages, les montées et les descentes.

13. Contrôleur électronique de frein et/ou contrôleur de la dynamique de conduite, **caractérisé en ce qu'**un procédé selon au moins l'une des revendications précédentes y est exécuté.
